# EUROPEAN PATENT SPECIFICATION

(11) **EP 2 310 722 B1**
(45) Date of publication and mention of the grant of the patent: **02.09.2015**
(21) Application number: 09775808.0
(22) Date of filing: 03.06.2009
(51) Int. Cl.: F16J 15/12, F16L 23/18, F16L 23/20, F16L 23/22

(54) **COMBY TWO-SIDED OVERLAIN GASKET FOR SEALING OF DISMOUNTABLE FLANGED JOINTS**
ZWEISEITIGER ÜBERLAGERTER KOMBI-DICHTRING ZUR ABDICHTUNG VON DEMONTIERBAREN FLANSCHVERBINDUNGEN
JOINT D'ÉTANCHÉITÉ COMBINÉ RECOUVERT DES DEUX CÔTÉS POUR L'ÉTANCHÉITÉ DE RACCORDS À BRIDES DÉMONTABLES

(30) Priority: 16.07.2008 CZ 20080445; 18.02.2009 CZ 20090096
(43) Date of publication of application: 20.04.2011
(73) Proprietor: Mico, Spol. S.R.O., 67401 Trebic (CZ)
(72) Inventor: KREJCI, Miroslav, 67201 Moravsky Krumlov (CZ)
(74) Representative: Musil, Dobroslav
(86) International application number: PCT/CZ2009/000078
(87) International publication number: WO 2010/006561

(56) References cited:
- EP-A- 0 922 897
- CZ-U1- 9 482
- DE-A1- 2 629 548
- DE-A1- 4 230 322
- DE-U1- 9 100 438
- DE-U1- 9 317 130
- DE-U1-202005 006 698
- DATABASE INSPEC [Online] THE INSTITUTION OF ELECTRICAL ENGINEERS, STEVENAGE, GB October 1968 MCCORD W M: 'Laboratory arrangement in a new perspective' Database accession no. 1 & AMERICAN JOURNAL OF PHYSICS USA vol. 36, no. 10, pages 874 - 878 ISSN: 0002-9505

## Description

### Technical field

The invention relates to the comby two-sided overlain gasket for sealing of dismountable flanged joints, for example of flanged joints on pipings, fittings, pressure vessels, etc., while the profile of the comby gasket is formed of grooves of a shape of letter V with opening angle of 90° whereas on both sealing contact surfaces of comby gasket there are between the grooves created concentric surfaces of a constant width from 0,2 mm to 0,6 mm, while the bottoms of the concentric grooves are created by rounding having radius of 0,3 mm to 0,5 mm and are overlain by a sealing foil or sealing plate having annular shape, which has the same inner and outer diameter as the annular comby gasket, whereas the concentric grooves in the sealing contact surfaces of the comby gasket are of a less volume than the volume of the sealing foil or sealing plate.

### Background art

The known comby gaskets for dismountably arranged flanged joints, fittings, pressure vessels, etc., are as a rule of a ring shape, or of annulus shape, whose cross-section is of various shape, this usually depending on material, that is used for sealing of the flanged joint. As a rule, the flanges are mutually connected by means of screws, through which a dismountable connection is obtained. The dismountable connection is advantageous for executing repairs, reconstructions, etc.

There are known comby gaskets, which are made of soft alloy steel or austenitic steel. Mostly the comby gasket is overlain on both sides with sealing board or foil from expanded graphite, expanded teflon, thermiculite, mica, aluminium, nickel, silver, etc. Selection of a particular material used for the sealing plate or sealing foil is affected especially by chemical-physical properties of the media, which is led by the pipeline system or which is present in the sealed pressure vessel.

Gaskets for flanged joints are usually of a ring shape and are on the contact sealing surfaces provided with concentric grooves having a shape of letter V with opening angle of 90°, spacing of 1,5 mm and depth of 0,75 mm. The mentioned grooves having a shape of letter V cause, in conjunction with sealing lining, a transformation of the sealing lining when being compressed between the sealing compression surfaces of flanges. Through this transformation of the sealing lining the sealing effect of the flanged joint is increased. Achievement of the most efficient sealing effect with the longest operational reliability of the sealed flanged joint is influenced not only by the chemical properties of the medium led in the pipeline, but also by its temperature and pressure. Demandingness to the mentioned sealing effect is further increased in a case when the pressure or temperature, eventually both these physical values, are varying during operation of the pipeline in a relatively large range. The mentioned sealing effect of a flanged joint is also influenced by a specific pressure caused by the screws, which mutually join and tighten the flanges, are provided on the pipeline or on pressure vessels, and which are dimensioned from structural and shape point of view in a proper manner.

There is known a comby gasket on both sides overlain with a foil of expanded graphite, that features very good sealing properties even at high specific pressures and high temperatures. Upon compressing of the comby gasket between the sealing surfaces of flanges, the foil from expanded graphite is being subject to transformation into its grooves. During installation it is necessary to secure the compressing so that between the peaks of grooves created on the contact surface of the comby gasket and the sealing compression surface of the flange a continuous layer of expanded graphite is present. If, due to installation works or during working stress of the flanged joint, a direct contact of groove peaks in contact surfaces of comby gasket with sealing compression surface of the flange occurs, then the foil of expanded graphite is cut through and the sealing principle of auxiliary sealing stream, which was created by enclosing the expanded graphite in the grooves of the comby gasket, is disturbed. Through this the sealing effect of flanged joint is devalued and it is necessary to execute a repair. Moreover, in such case there are quite often galls on sealing surfaces of flanges, which increases requirements for executing the repair.

The above mentioned shortcoming, which is caused by mating respectively by a direct contact of the comby gasket with sealing surfaces of flanges, is considerably restricted by the fact that the comby gasket provided with grooves of a shape of letter V and opening angle of 90° is between the individual grooves provided with bridges having width of 0,25 mm to 0,4 mm. Fitting this foil to the comby gasket facilitates sticking of sealing foil to the comby gasket, as well as improvement of conditions for executing of installation and maintenance works. It is advantageous to use an adhesive, whose adhesion could be affected already by lower temperatures.

DE Gebrauchsmuster G 91 00 438.1 and G 93 17 130.7 describe a comby two-sided overlain gasket for sealing of dismountable flanged joints, which comprises two sealing contact surfaces, in which there are created concentric grooves in a shape of letter V, whereas between the grooves there are created bridges formed by concentric surfaces and the bottoms of the concentric grooves are rounded. The peaks of the outer grooves are higher than the peaks of the inner grooves, so when drawing of the flanges close the sealing the peaks of the outer grooves deform the surface of the relevant flange and the sealing means stays closed in annulus determinate by peaks of the outer grooves. In case of disassembly of the sealed joint it is necessary before inserting a new sealing to execute repair of both flanges, to reach reliable sealing of the flanged joint.

In the similar way the comby gasket described in EP 0922897 A2 is constructed. The higher peaks of the outer grooves are arranged in one plane with surrounding surface of the sealing, what prevents their damage during drawing of the flanges close the sealing. The disadvantage of this solution is the fact that the amount of the sealing material has to exactly fill in the space between the higher peaks of the outer grooves, what brings higher requirements for preciseness of production of the sealing foil or plate.

Another prior art comby two-sided overlain gasket, in accordance with the preamble of claim 1, is known from CZ 9 482 U1.

The flanged joints are in some cases applied in pipeline systems, that feature a considerable, nearly extraordinary mechanical as well as heat stress. In these cases, especially at flanged joints of larger diameters, this stress worsens the sealing effect, service life and reliability of sealing joint, the level of achievable surface parallelism of contact surfaces of flanges being connected. Non-parallelism of contact connection surfaces of flanges as well as their possible surface deformations and irregularities, make the installation works more demanding and negatively influence parameters of sealing effect, especially in a case when an annular comby two-sided overlain gasket is used for sealing of the joint.

The goal of the submitted technical solution according to the invention is to achieve improvement of background art and to optimise conditions for production of the most operationally reliable sealing effect by the flanged joints, as well as reduction of negative impact of non-parallelism and deformations of surfaces of flanges being connected, this also at utilisation of know-how for installation and servicing works.

### Principle of the invention

The goal of the invention has been achieved through a comby two-sided overlain gasket for sealing of dismountable flanged joints, according to claim 1. Its principle consists in that each of the sealing contact surfaces of the comby gasket is created on an independent annular part, which are on an inner diameter bent in the direction to one another and in a contact place are connected, while on the outer side they mutually overlap, and at least in one of them there is created an annular recess, which forms upon connection of both annular parts the annular chamber.

By the above it is achieved a long-term reliable sealing effect and to decrease the negative impact of non-parallelism and deformation of surfaces of flanges being connected..

Connection of both annular parts is formed either by a fixed edge joint, e.g. by a weld or by a dismountable joint, e.g. by a locking offset.

From the point of view of economy for reliable achievement of sealing effect it is preferred, if the annular chamber is of a square or rectangular cross-section.

Further it is preferred if at least one of the annular parts is upon acting of axial compression force springy flexible.

Preferably, in the annular chamber an annular springy insertion of expanded graphite is mounted, which further decreases effect of non-parallelism and deformations of connected surfaces of flanges during operation.

### Description of the drawings

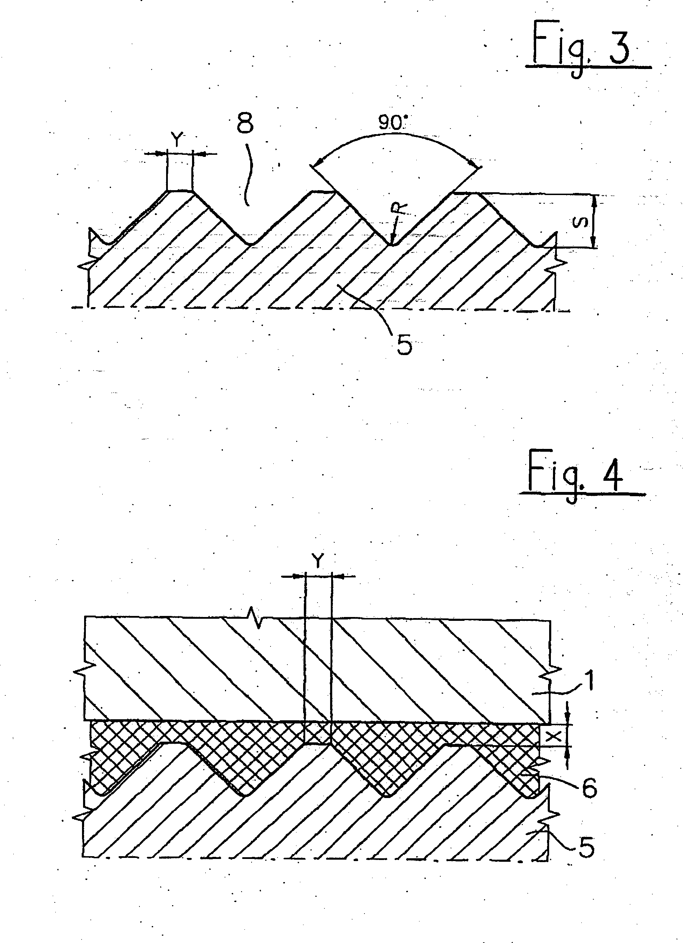

Exemplary, embodiment of invention is represented in the drawings, figures 3 to 9.

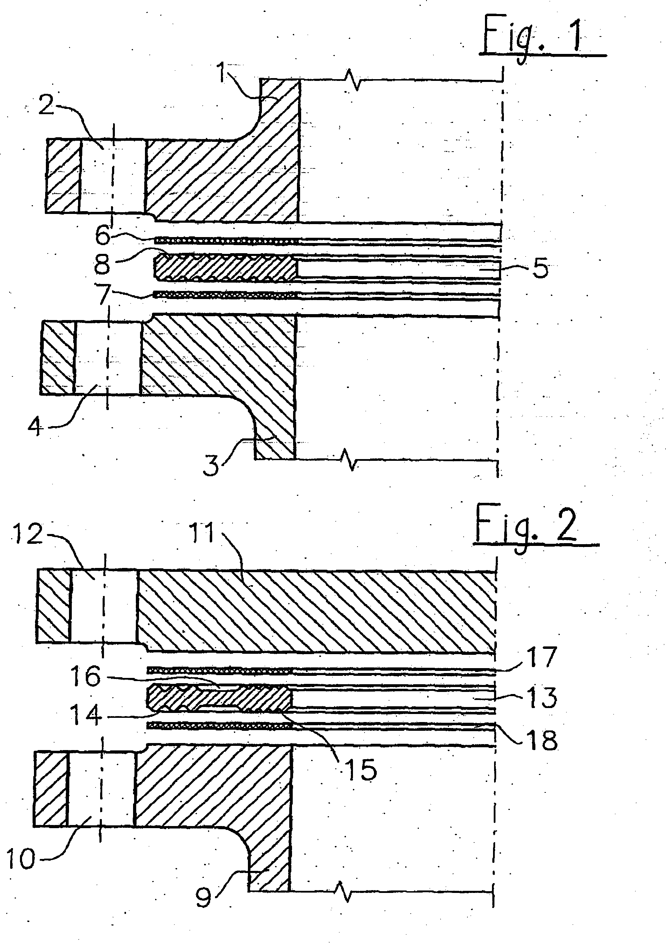

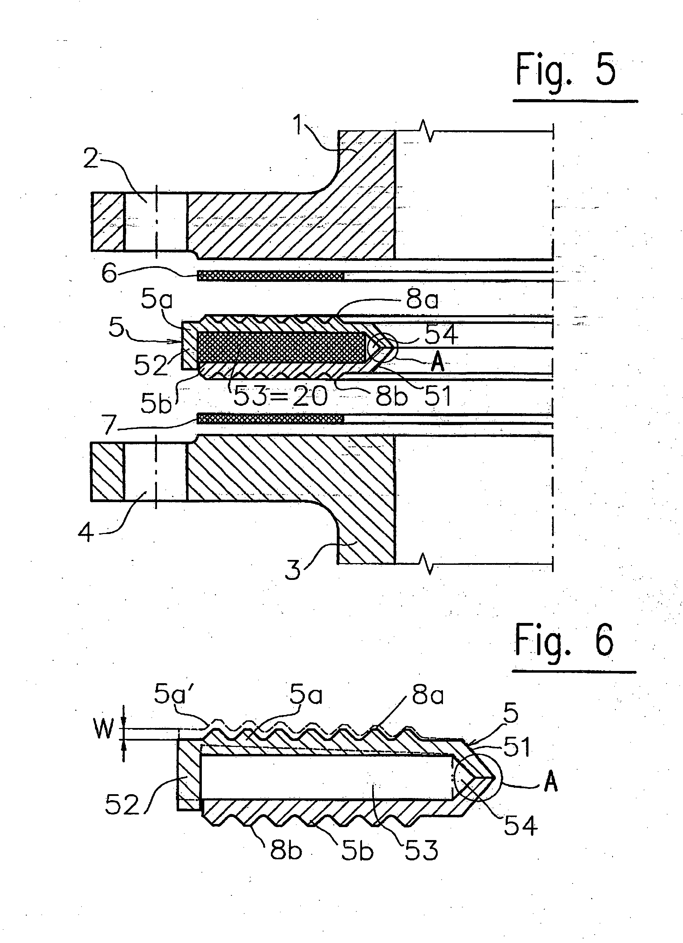

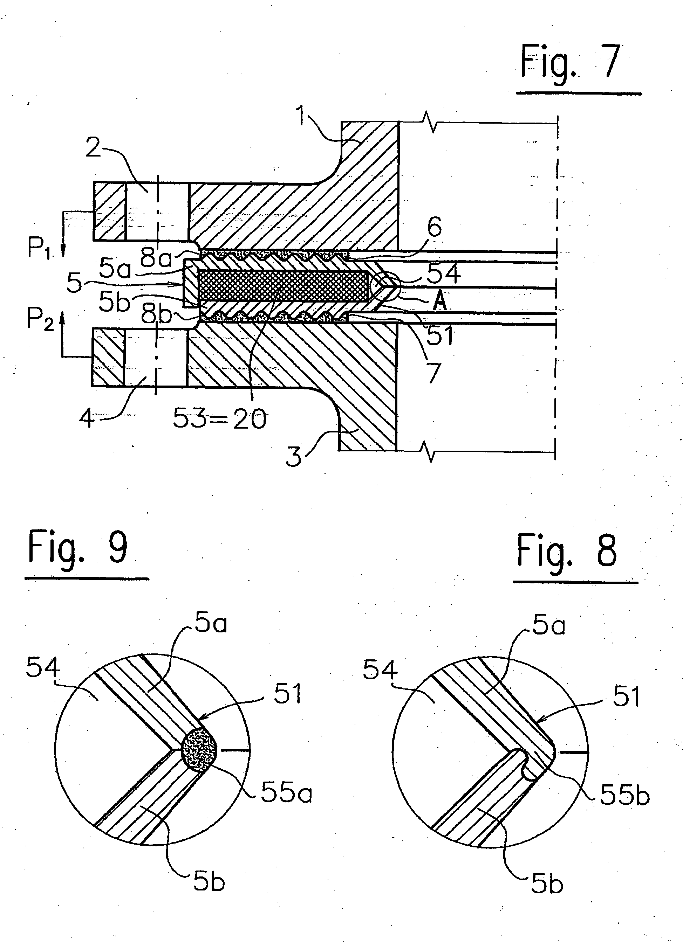

The Fig. 1 shows partial axial cross-section through flanges connecting the pipeline with a non-claimed comby gasket, which is two-sided overlain by a sealing foil, what everything is of an annular shape, the Fig. 2 partial cross-section through a flange forming the end of a pressure vessel which is sealed by a cover by means of a two-sided overlain comby gasket, at which two groups of grooves of a different depth are applied. The Fig. 3 in partial cross-section and in an enlarged scale a profile of a shape of grooves formed on the comby gasket as in the invention, the Fig. 4 shows in an enlarged scale a partial cross-section through the flange, comby gasket and the sealing foil after its compressing in a flanged joint, the Fig. 5 partial axial cross section through the flanges connecting the pipeline with the comby longitudinally split gasket according to the invention, provided with a springy insertion, while the comby gasket is two-sided overlain with sealing foil and everything is of an annular shape, the Fig. 6 cross section through the comby longitudinally split gasket according to the invention with marked difference of compressibility between the surfaces of annular parts of a gasket as a result of action of axial compression of flanges being connected, the Fig. 7 partial axial cross section through flanges connecting the pipeline with the comby longitudinally split gasket as in the Fig. 5, nevertheless with the difference, that there is shown the setting of sealing elements after compressing by means of contact surfaces of flanges being connected, the Fig. 8 partial cross-section, in an enlarged scale the detail "A" in the Fig. 5, representing connection of annular flat parts on their inner diameter by means of a locking offset, and the Fig. 9 shows partial cross section as in the Fig. 8 with the difference, that there is shown connection on an inner diameter by means of a weld.

### Examples of embodiment

The upper flange **1** (Fig. 1) at the end of not represented pipeline is provided with holes **2** designed for the not represented connection screws. Also the lower flange **3** at the end of connected not represented pipeline is provided with holes **4** for the mentioned connection screws. Method and embodiment of this flanged joint is commonly known. Into the space between contact surfaces of flanges **1**, **3** the comby annular gasket **5** is inserted. The comby gasket **5** is on two sides overlain with sealing foil or sealing plate **6**, **7** also of an annular shape, whose outer as well as inner diameter is preferably identical with an inner and outer diameter of annular comby gasket **5**. The sealing contact surfaces of annular comby gasket **5** are provided with concentric grooves **8**, between which on both sealing contact surfaces there are created concentric surfaces **Y**. Width of surface **Y** is usually selected in the range from 0,2 mm to 0,6 mm and it depends not only on the material used for production of the sealing foil or sealing plate **6**, **7**, but also on the pressure, temperature and medium, that is led through the pipeline connected by means of the mentioned flanged joint. In bottom section of the grooves **8** the rounding **R** having diameter of 0,3 to 0,5 mm is created. The created rounding **R** positively influences distribution of tension caused by the foil or plate **6**, **7** towards the bottom of the grooves **8** upon tightening of flanged joint by a compression effect. This structural provision positively influences reliability as well as total service life of sealing of the flanged joint.

A not represented pressure vessel is ended up by flange **9** (Fig. 2) and is on its perimeter provided with holes **10** for the not represented connection screws. Closing of the pressure vessel is created by a cover formed of covering flange **11**, also on its perimeter provided with holes **12** for connection screws. Also this method of closing the pressure vessels is commonly known.

Between the flange **9** of pressure vessel and the cover formed of covering flange **11** there is inserted the annular comby gasket **13**, which is in the represented embodiment on its contact sealing surfaces provided with two systems of concentric annular grooves **14**, **15** of a different depth **S**. The system of deeper concentric grooves **14** is from the system of shallower concentric grooves **15** separated by an annular recess **16**. Also this embodiment of the annular comby gasket **13** is on both sides overlain with the sealing foil or sealing plate **17**, **18**. Application of different depth of annular grooves **14**, **15** is an advantageous technical provision that enhances the sealing effect, especially in case of surface deformation of the cover formed of the covering flange **11**, which may occur due to pressure in the pressure vessel.

After the screws of the flanged joint are tightened, the sealing foil or the sealing plate **6**, **7** is also with the comby gasket **5** compressed so that in the space between contact surfaces of the flanges **1**, **3**, **9**, **11**, and surfaces **Y** between the grooves **8** of comby gasket **5** there is to be found a compact integral layer **X** of a material of the sealing foil, possibly of sealing plate **6**, **7**, respectively **17**, **18**. Thickness of this compact integral layer **X** is in practice determined to be in the range of 0,02 mm to 0,3 mm, this depending on material used for the sealing foil or sealing plate **6**, **7** respectively **17**, **18**, as well as on pressure and temperature of medium being sealed by the flanged joint. Thickness of the compact integral layer **X** (Fig. 4) of material of the sealing foil or of sealing plate **6**, **7**, **17**, **18** after tightening of the flanged joint has an immediate impact on the achieved sealing effect. Inadequately great thickness of the layer **X** of material causes especially due to acting of pressure that the material of sealing foil or of sealing plate **6**, **7**, **17**, **18** is pushed away, thus causing the undesirable reduction of sealing effect in the flanged joint.

The shape and dimensional arrangement of the comby two-sided overlain gasket for sealing of dismountable flanged joints has a volume of inner space of the grooves **8** of comby gasket **5**, **13** smaller than the volume of sealing foil or of sealing plate **6**, **7**, **17**, **18** after tightening of flanged joint.

To facilitate installation works, including maintenance works, it is advantageous if the comby gasket **5**, **13**, is on both sides overlain with sealing foil or sealing plate **6**, **7**, **17**, **18**, stuck by adhesive of relatively low melting point, e.g. of cca 50ºC. The mentioned advantage consists in that by acting of heat there are created conditions for easier and troublefree removal of damaged sealing foil or plate **6**, **7**, respectively **17**, **18**.

The described technical solution according to the invention is applicable for pipelines and pressurised systems, in which the sealed medium has a high transportation pressure, e.g. pressure of 100 - 150 MPa, and varying temperature that may reach more than 500 °C. Solution according to the invention may also be applied for the systems working with underpressure.

Material, which is used for the sealing foil or sealing plate **6**, **7**, **17**, **18** is as a rule subjected to parameters and properties of the sealed medium, which means that adequately suitable material except for expanded graphite is also e.g. expanded teflon, silver, thermiculite, aluminium, special fibrous-rubber materials, etc.

In example of embodiment according to the invention, shown in Fig. 5 and 7 the flange **1** at the end of not represented pipeline is provided with holes **2** designed for the not represented connection screws. Also the lower flange **3** at the end of joined not represented pipeline is provided with holes **4** for the mentioned not represented connection screws. Into the space between the contact surfaces of flanges **1**, **3** there is inserted the annular comby gasket **5**. The comby gasket **5** is from both sides overlain by a sealing foil or sealing plate **6**, **7** also of annular shape, whose outer as well as inner diameter is preferably relatively identical with inner and outer diameter of the annular comby gasket **5**. The annular comby gasket **5** is made of two annular flat parts **5a**, **5b** and their inner diameter is ended by bending **51**. Annular flat parts **5a**, **5b** are preferably in its surface shaped as a mirror-image with the exception of their ending on outer circumference. One of the annular flat parts, e.g. the part **5a**, on the outer circumference is provided with vertical detent **52**, which displaceably overlaps the outer circumference of the second oppositely arranged part **5b**. Outer surface of annular flat part **5a** is provided with concentric grooves **8a**, and the outer surface of opposite annular flat part **5b** is provided with concentric grooves **8b**. At least one of the annular flat parts, e.g. **5a** is on the inner surface provided with a recess, which after assembly of both annular flat parts **5a**, **5b** forms a lockable chamber **53** of rectangular or square shape. The lockable chamber **53** is due to its bending **51** and a fixed connection by the weld **55a**, or by locking offset **55b**, on inner diameter of the mentioned annular flat sections **5a**, **5b** ended in the direction to the inner diameter by a space **54** of triangular shape.

Upon assembly of the annular comby gasket **5** it is suitable from the point of view of technology, before creating the fixed, especially non-dismountable, joint of annular flat parts **5a**, **5b**, on their inner diameter, that into the space of lockable chamber **53** is inserted an annular springy insertion **20** of expanded graphite or other material with anti-extrusive properties, that secure stability of the preload being set, including the ability of back recovery. Thickness of the springy insertion **20**, of rectangular or square diameter, is structurally dimensioned depending on diameter of flanged joint being sealed; on operational pressure and temperature of medium led by pipeline, optimum axial compressing of flanges being connected in direction of arrows **P₁** and **P₂** and also taking into account usability of adjustable preload shown graphically by the illustrated value **W**.

The surface flexibility, respectively ability of surface flexibility of annular flat parts **5a**, **5b** in cooperation with property of flexible elasticity of the material, from which the springy insertion **20** is produced, enables that in cases of adequate deformation or adequate non-parallelism of contact surfaces of connected flanges **1**, **3** in cooperation with know-how respected during assembly of flanged joints, and at simultaneous utilisation of principle of the technical solution according to the invention, a relatively perfect sealing effect with long-term service life was achieved.

### Industrial applicability

Technical solution according to the invention is applicable for pressurised and underpressurized pipeline systems in which, according to the operational needs, both the pressure as well as temperature of medium being sealed is varying. Testing of such sealed flanged joints verified their reliability as well as their service life at pressures above 150 MPa and temperatures above 500 °C.

### List of referential markings

- 1: upper flange
- 2: holes
- 3: lower flange
- 5: comby gasket
- 5a, 5b: annular flat parts of comby gasket
- 51: bending
- 52: vertical detent
- 53: chamber
- 54: space of triangular shape
- 55a: weld
- 55b: locking offset
- 6, 7: sealing foil or plate
- 8: concentric grooves
- 8a, 8b: concentric grooves
- 9: flange
- 10: holes
- 11: covering flange
- 12: holes
- 13: comby gasket
- 14: deeper concentric grooves
- 15: shallower concentric grooves
- 16: annular recess
- 17, 18: sealing foil or plate
- 20: springy insertion
- Y: concentric surface
- R: radius of groove rounding
- S: groove depth
- X: layer of material

## Claims

1. Comby two-sided overlain gasket (5, 13) for sealing of dismountable flanged joints, which comprises two sealing contact surfaces, in which there are created concentric grooves (8) in a shape of letter V with opening angle of 90°, whereas on both sealing contact surfaces of the comby gasket (5, 13) there are between the grooves (8) created concentric surfaces (Y) of constant width from 0,2 mm to 0,6 mm, while the bottoms of the concentric grooves (8) are created by rounding (R) having radius of 0,3 mm to 0,5 mm and both sealing contact surfaces of the comby gasket (5, 13) are overlain by a sealing foil or sealing plate (6, 7 or 17, 18) of an annular shape whose outer as well as inner diameter is identical with an inner and outer diameter of annular comby gasket, whereas the concentric grooves (8) in the sealing contact surfaces of the comby gasket (5, 13) are of a less volume than the volume or the sealing foil or sealing plate (6, 7 or 17, 18), **characterised in that** each of the sealing contact surfaces of the comby gasket (5,13) is created on an independent annular part (5a, 5b) which are on an inner diameter bent in the direction to one another and are connected in a contact place, while on the outer side they mutually overlap, and at least in one of them there is created an annular recess, which upon connection of both annular parts forms an annular chamber (53).

2. Comby two-sided overlain gasket according to the claim 1, **characterised in that**, the connection of both annular parts (5a, 5b) is formed by a fixed edge joint, e.g. by a weld (55a).

3. Comby two-sided overlain gasket according to the claim 1, **characterised in that**, the connection of both annular parts (5a, 5b) is formed by a dismountable joint, e.g. by a locking offset (55b).

4. Comby two-sided overlain gasket according to any of the claims 1 to 3, **characterised in that**, the annular chamber is of a square or rectangular cross-section.

5. Comby two-sided overlain gasket according to any of the claims 1 to 4, **characterised in that** at least one of the annular parts is upon acting of axial compression force springy flexible.

6. Comby two-sided overlain gasket according to any of the claims 1 to 5, **characterised in that**, in the annular chamber there is mounted an annular springy insertion (20) of expanded graphite.

## Patentansprüche

1. Beidseitig verkleidete Flachkammdichtung (5, 13) zum Verdichten der lösbaren Flanschverbindungen, die zwei Dichtungsstoßflächen aufweist, in denen gleichmittige Nuten (8) in der V-Form mit einem Öffnungswinkel von 90° gebildet werden, wobei auf beiden Dichtungsstoßflächen der Kammdichtung (5, 13) zwischen den Nuten (8) gleichmittige Flächen (Y) mit einer konstanten Breite von 0,2 mm bis 0,6 mm gebildet werden, wobei die Böden der gleichmittigen Nuten (8) durch eine Abrundung (R) mit einem Radius von 0,3 mm bis 0,5 mm gebildet werden und beide Dichtungsstoßflächen der Kammdichtung mit einer Dichtungsfolie oder einer Dichtungsplatte (6, 7, beziehungsweise 17, 18) einer ringförmigen Form verkleidet werden, deren Außen- und Innendurchmesser mit dem Innen- und Außendurchmesser der ringförmigen Kammdichtung übereinstimmend ist, wobei die gleichmittigen Nuten (8) in den Dichtungsstoßflächen der Kammdichtung (5, 13) das Volumen kleiner als das Volumen der Dichtungsfolie oder der Dichtungsplatte (6, 7, respektive 17, 18) aufweisen, **dadurch gekennzeichnet, dass** jede der Dichtungsstoßflächen der Kammdichtung (5, 13) auf einem selbstständigen ringförmigen Bestandteil (5a, 5b) gebildet ist, die auf dem Innendurchmesser zueinander gebogen sind und in der Stoßstelle verbunden sind, wobei sie sich auf der Außenseite gegenseitig überlappen und mindestens in einer von ihnen eine ringförmige Ausnehmung gebildet wird, die bei der Verbindung beider ringförmigen Bestandteile eine Ringkammer (53) bildet.

2. Beidseitig verkleidete Flachkammdichtung nach dem Anspruch 1, **dadurch gekennzeichnet, dass** die Verbindung beider ringförmigen Bestandteile (5a, 5b) durch feste Saumverbindung, z.B. durch eine Schweißnaht (55a) gebildet wird.

3. Beidseitig verkleidete Flachkammdichtung nach dem Anspruch 1, **dadurch gekennzeichnet, dass** die Verbindung beider ringförmigen Bestandteile (5a, 5b) durch eine lösbare Verbindung, z.B. durch eine Schlossverpressung (55b) gebildet wird.

4. Beidseitig verkleidete Flachkammdichtung nach einem der Ansprüche 1 bis 3, **dadurch gekennzeichnet, dass** die Ringkammer einen quadratförmigen oder rechteckigen Querschnitt aufweist.

5. Beidseitig verkleidete Flachkammdichtung nach einem der Ansprüche 1 bis 4, **dadurch gekennzeichnet, dass** mindestens einer der ringförmigen Bestandteile bei der Wirkung der Axialklemmkraft flexibel biegsam ist.

6. Beidseitig verkleidete Flachkammdichtung nach einem der Ansprüche 1 bis 5, **dadurch gekennzeichnet, dass** in der Ringkammer eine ringförmige federnde Einlage (20) aus einem expandierten Graphit gelagert ist.

## Revendications

1. Garniture de peigne plane bilatérallement entourée (5, 13) pour obturer les joints à bride désassemblants qui comprend deux surfaces étanchantes de liaison, dans lesquelles sont formées les rainures concentriques (8), ayant la forme de la lettre V, avec l'angle d'ouverture de 90°, en temps que sur les deux surfaces étanchantes de contact de la garniture de peigne (5, 13) sont formées entre les rainures (8) les surfaces concentriques (Y), ayant la largeur constante de 0,2 mm à 0,6 mm, en temps que les fonds des rainures concentriques (8) sont formés par le fait d'arrondir (R), ayant le rayon de 0,3 mm à 0,5 mm et, les deux surfaces étanchantes de contact de la garniture de peigne sont entourées par la feuille étanchante ou par la plaque étanchante (6, 7, respectivement 17, 18), ayant la forme annulaire, le rayon externe et interne de laquelle est identique au rayon externe et interne de la garniture de peigne annulaire, en temps que les rainures concentriques (8) dans les surfaces étanchantes de contact de la garniture de peigne (5, 13) ont la capacité plus petite que la capacité de la feuille étanchante ou de la plaque étanchante (6, 7, respectivement 17, 18), **caractérisé en ce que** chacune des surfaces étanchantes de contact de la garniture de peigne (5, 13) est formée sur une partie autonome annuaire (5a, 5b), qui sont sur la partie intérieure du diamètre pliées vers soi-mêmes et, dans l'endroit du contact elles sont liées, en temps que dans la partie extérieure elles sont recouvertes mutuellement et, au moins dans une d'elles est formé le dégagement intérieur annuaire, qui pendant la liaison des deux parties composantes annuaires, forme la chambre annuaire (53).

2. Garniture de peigne plane bilatérallement entourée (5, 13) selon la revendication 1, **caractérisé en ce que** la liaison des deux parties composantes annuaires (5a, 5b) est formée par le joint de bordure solide, par exemple par une soudure (55a).

3. Garniture de peigne plane bilatérallement entourée (5, 13) selon la revendication 1, **caractérisé en ce que** la liaison des deux parties composantes annuaires (5a, 5b) est formée par le joint désassemblant, par exemple par une impression de serrure (55b).

4. Garniture de peigne plane bilatérallement entourée (5, 13) selon quelconque des revendications de 1 à 3, **caractérisé en ce que** la chambre annuaire a la coupe carrée ou rectangualire.

5. Garniture de peigne plane bilatérallement entourée (5, 13) selon quelconque des revendications de 1 à 4, **caractérisé en ce qu'**au moins une des parties composantes annuaires est pendant l'action de la force de serrage axiale élastiquement flexible.

6. Garniture de peigne plane bilatérallement entourée (5, 13) selon quelconque des revendications de 1 à 5, **caractérisé en ce que** dans la chambre annuaire est placée la cale annuaire élastique (20) du graphite expansé.
